# EUROPEAN PATENT APPLICATION

(11) **EP 3 722 187 A1**
(43) Date of publication of application: **14.10.2020**
(21) Application number: 18886241.1
(22) Date of filing: 07.12.2018
(51) Int. Cl.: B62D 25/20, B62D 29/00

(54) **VEHICLE FRONT FLOOR STRUCTURE, ALUMINUM ALLOY EXTRUSION MOLDED PART AND VEHICLE**

(30) Priority: 08.12.2017 CN 201711290106
(71) Applicant: NIO Nextev Limited, Central, Hong Kong (HK)
(72) Inventor: JING, Haitao, Central Hong Kong (CN); CHENG, Ming, Central Hong Kong (CN); YANG, Chuanyi, Central Hong Kong (CN); LI, Shuo, Central Hong Kong (CN); SHEN, Xuekai, Central Hong Kong (CN); ZHENG, Wang, Central Hong Kong (CN); QIN, Le, Central Hong Kong (CN); CHENG, Haidong, Central Hong Kong (CN)
(74) Representative: v. Bezold & Partner Patentanwälte - PartG mbB
(86) International application number: PCT/CN2018/119802
(87) International publication number: WO 2019/110008

(57) **Abstract**

Disclosed is a vehicle front floor structure, an aluminium alloy extrusion moulded member and a vehicle. The vehicle front floor structure comprises a left rocker panel (1), a right rocker panel (2) and a plurality of cross beams (3) arranged between the left rocker panel (1) and the right rocker panel (2), wherein the cross beams (3) comprise at least two cross beams of a first type arranged at intervals, and the at least two cross beams of the first type are both aluminium alloy extrusion moulded members and are configured to have different cross-sectional shapes from each other, such that the amount of deformation of the left rocker panel (1) and/or the right rocker panel (2) when a vehicle is subjected to a side impact meets a set requirement, which includes maintaining a set distance between the deformed left rocker panel (1) and/or right rocker panel (2) and a vehicle component that is mounted on at least some of the cross beams in a suspended manner.

## Description

### Technical Field

The invention relates to the technical field of vehicles, in particular to a vehicle front floor structure, an aluminium alloy extrusion moulded member and a vehicle.

### Background Art

Various types of vehicles are widely used in daily work and life of people, and the safety and reliability of the vehicles have increasingly become the focus of attention. However, existing vehicles still have some drawbacks and disadvantages in terms of safety design, which have not yet effectively solved. For example, with the continuous progress of science and technology, various types of new energy vehicles such as battery electric vehicles and hybrid electric vehicles are increasingly used, but these new vehicles may have problems such that vehicle bodies having light weight and insufficient strength, and the relatively large amount of deformation intrusion of rocker panels when a side impact occurs, so that it is difficult to provide effective protection for vehicle components (e.g., battery packs) mounted at lower portions of the vehicle bodies, and to avoid that these components are damaged or destroyed and accordingly may further jeopardize the safety of vehicles and personal. Accordingly, it is quite necessary for research and improvement in light of the existing problems or deficiencies, including those set forth above.

### Summary of the Invention

In view of this, the invention provides a vehicle front floor structure, an aluminium alloy extrusion moulded member and a vehicle, to effectively solve the above and others problems existing in the prior art.

First, according to a first aspect of the invention, there is provided a vehicle front floor structure, comprising a left rocker panel, a right rocker panel, and cross beams arranged between the left rocker panel and the right rocker panel, characterized in that the cross beams comprise at least two cross beams of a first type arranged at intervals, and the at least two cross beams of the first type are both aluminium alloy extrusion moulded members and are configured to have different cross-sectional shapes from each other, such that the amount of deformation of the left rocker panel and/or the right rocker panel when a vehicle is subjected to a side impact meets a set requirement, which includes maintaining a set distance between the deformed left and/or right rocker panel and a vehicle component that is mounted on at least some of the cross beams in a suspended manner.

In the vehicle front floor structure according to the invention, optionally, the cross beams further comprise at least one cross beam of a second type, which is a steel stamped member and is arranged spaced apart from the at least two cross beams of the first type.

In the vehicle front floor structure according to the invention, optionally, the at least one cross beam of the second type and the at least two cross beams of the first type are configured to have different cross-sectional shapes from each other, such that the amount of deformation of the left rocker panel and/or the right rocker panel when the vehicle is subjected to the side impact meets the set requirement.

In the vehicle front floor structure according to the invention, optionally, the cross beams are all formed from the cross beams of the first type.

In the vehicle front floor structure according to the invention, optionally, the cross beams are arranged to have a decreasing cross-sectional area in a longitudinal direction from a vehicle head to a vehicle tail.

In the vehicle front floor structure according to the invention, optionally, at least two of the cross beams are configured to have the same cross-sectional shape as each other.

In the vehicle front floor structure according to the invention, optionally, the cross beams are all fixedly connected to the left rocker panel and the right rocker panel by means of mechanical connection, and the at least some of the cross beams are provided with one or more mounting portions for mounting and connecting the vehicle component thereto.

Next, according to a second aspect of the invention, there is also provided an aluminium alloy extrusion moulded member, used for the cross beams of the first type in the vehicle front floor structure as described in any one of the above.

Furthermore, according to a third aspect of the invention, there is also provided a vehicle comprising a vehicle front floor structure as described in any one of the above, or comprising at least two aluminium alloy extrusion moulded members as described above.

The vehicle according to the invention optionally includes a battery electric vehicle and a hybrid electric vehicle.

Compared with the prior art, the strength of the cross beams of the vehicle body can be remarkably increased by adopting the vehicle front floor structure of the invention, accordingly, the side impact performance of the vehicle is improved, and the requirements for the side impact of a new energy vehicle can be particularly met, such that various vehicle components mounted at the lower portion of the vehicle body are effectively protected, and the safety and reliability of the whole vehicle are improved. In addition, by flexibly designing, selecting and adjusting various aluminium alloy extrusion moulded members with suitable structural shapes, sizes, etc. and by rationally arranging the aluminium alloy extrusion moulded members in the vehicle front floor structure, the invention can meet the various requirements for vehicle models with different performances, vehicle models with different wheelbases, vehicle models with different track widths, etc., and therefore the invention has a quite strong adaptability and expansibility.

### Brief Description of the Drawing

The technical solution of the invention will be further described in detail below with reference to accompanying drawing and embodiments. However, it should be understood that the accompanying drawing is designed for the purpose of illustration only and therefore is not intended to limit the scope of the invention. In addition, unless otherwise specified, these accompanying drawing is intended to be merely conceptually illustrative of the structural configurations described herein, and is not necessarily drawn to scale.

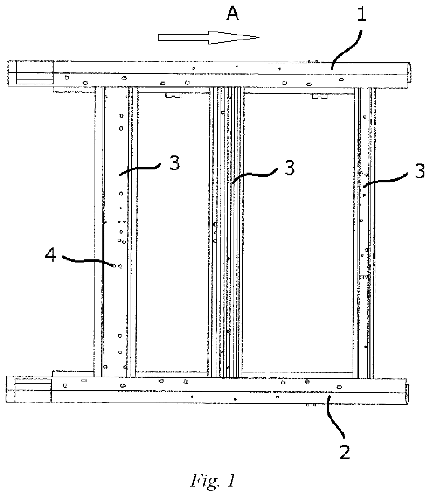

Fig. 1 is a schematic structural top view of an embodiment of a vehicle front floor structure according to the invention.

### Detailed Description of Embodiments

First, it should be noted that the specific structures, compositions, characteristics, advantages, etc. of a vehicle front floor structure, an aluminium alloy extrusion moulded member and a vehicle according to the invention will be specifically described below by way of example, however, all the descriptions are intended to be illustrative only and should not be construed as limiting the invention in any way.

Furthermore, unless otherwise specified herein, the various parts, components, features or devices, etc. referred to in the technical solutions of the invention are allowed to be arbitrarily combined to form further embodiments that may not be explicitly described herein. Additionally, in order to simplify the figures, the same or similar parts and features may only be marked at one or several places in one and the same figure.

The basic structure of an embodiment of a vehicle front floor structure is illustrated in a top view schematically and generally in Fig. 1. In this embodiment, the vehicle front floor structure comprises a left rocker panel 1, a right rocker panel 2, and three cross beams 3 arranged therebetween, which will be described in detail below in connection with this embodiment.

In the prior art, the cross beam components in the vehicle front floor structure are formed generally by using a steel stamped sheet and are arranged on the vehicle front floor. However, the amount of intrusion of the rocker panels in a side impact is still large, so that various vehicle parts mounted at a lower portion of the vehicle body cannot be effectively protected. However, unlike the prior art, according to the design idea of the invention, the cross beams 3 in the vehicle front floor structure are all in the form of aluminium alloy extrusion moulded members, or may also formed from two aluminium alloy extrusion moulded members and a steel stamped member in combination. Particularly, without departing from the spirit of the invention, the three cross beams 3 may be configured to have completely different cross-sectional shapes respectively, and are arranged, in a vehicle front floor area, to be spaced apart from one another by selectable distances in various combinations. In this way, the amount of deformation of the left rocker panel 1 and/or the right rocker panel 2 when the vehicle is subjected to a side impact can meet a set requirement, that is, it is ensured that the vehicle body is provided with the cross beams with sufficient strength, thereby improving the side impact performance of the vehicle. For example, the set requirement may include: maintaining a set distance between the deformed left and/or right rocker panel and vehicle components mounted on the cross beams 3 in a suspended manner, that is, the vehicle components (not shown), such as a battery pack, that are mounted at the lower portion of the vehicle body need to be protected by means of a small amount of intrusive deformation of the rocker panel. These vehicle components may be mounted onto the vehicle body via, for example, mounting portions 4 (e.g., mounting holes, etc.) arranged on the cross beams 3. Due to the space existing between the cross beam 3 and the vehicle front floor itself, at least a part of the vehicle component, such as the battery pack, is placed inside the space and suspended from the cross beam 3, the amount of deformation of the left and/or right rocker panel when the vehicle is subjected to a side impact needs to ensure that a set distance is maintained between the left and/or right rocker panel and the vehicle component such as the battery pack, and the amount of deformation of the left and/or right rocker panel then cannot be greater than the set distance, the purpose of which is that the deformation of the left and/or right rocker panel does not affect the vehicle component such as the battery pack, and thus does not cause the safety problems (e.g., leakage) of the battery pack, for example, due to the deformation of the left and/or right rocker panel.

By way of example, as in the situation shown in Fig. 1, the cross beams 3 in the vehicle front floor structure may optionally be arranged in such a manner as to have a decreasing cross-sectional area in a longitudinal direction A from a vehicle head to a vehicle tail, so that the occupied space is reduced as much as possible in the case of satisfying the safety performances of durability, impact, etc. Of course, it should be noted that the specific set number, arrangement positions, structural shapes, sizes, etc. of the aluminium alloy extrusion moulded members or the steel stamped members used as the cross beams 3 in the invention may be specifically designed and selected according to the practical application without departing from the spirit of this application so as to better meet the requirements for the structural strength of the vehicle body and the safety of the vehicle in a side impact, the reliability of the whole vehicle, etc.

In the vehicle front floor structure according to the invention, the cross beams 3 may be fixedly connected to the left rocker panel 1 and the right rocker panel 2 by means of any suitable mechanical connection. Such a mechanical connection includes, but is not limited to, riveting, welding, fastener-based connection, etc, and two or more of these mechanical connections are also allowed to be used in combination in practical applications.

It should also be noted that although it has been discussed above in the invention that the cross beams (in the form of aluminium alloy extrusion moulded members, or of aluminium alloy extrusion moulded members and a steel stamped member) having different cross-sectional shapes are rationally arranged in the vehicle front floor area to achieve the objectives of the invention, in fact, the invention absolutely allows two or more of the cross beams to have the same cross-sectional shape in certain applications, in order to better meet these specific application requirements.

In addition, according to another technical solution of the invention, there is also provided an aluminium alloy extrusion moulded member used for the cross beams in the vehicle front floor structure. Such an aluminium alloy extrusion moulded member has good bending resistance and torsion resistance, so that the cross-sectional shape thereof can be adjusted according to actual demands to meet the requirements for vehicle models with different performances. The actual arrangement positions of the aluminium alloy extrusion moulded members can be adjusted according to demands to meet the requirements for vehicle models with different wheelbases without departing from the spirit of the invention. Moreover, the length of the aluminium alloy extrusion moulded member can also be adjusted according to demands so as to meet the requirements for vehicle models with different track widths. Since the foregoing has been described in detail with respect to the aluminium alloy extrusion moulded member, reference can be made to the foregoing, and the description will not be repeated herein.

Furthermore, according to still another technical solution of the invention, there is also provided a vehicle including, but not limited to, a battery electric vehicle, a hybrid electric vehicle, etc. The vehicle front floor structure designed according to the invention is arranged on the vehicle, for example, the vehicle front floor structure may be fixed between a front compartment and a back panel of the vehicle. Alternatively, the vehicle comprises at least two aluminium alloy extrusion moulded members designed according to the invention, for example, the cross beams 3 illustrated schematically in Fig. 1 are such aluminium alloy extrusion moulded members, and the cross beams 3 are then mounted on the vehicle front floor. The vehicle comprises this front floor. By adopting the technical solutions, the technical advantages of the invention, which are remarkably superior to the prior art, can be fully utilized, so that the strength of the cross beams of the vehicle body is effectively increased, the side impact performance of the vehicle is improved, various vehicle components mounted at the lower portion of the vehicle body are protected especially from being damaged, and the safety performance of the vehicle is improved.

The vehicle front floor structure, the aluminium alloy extrusion moulded member and the vehicle according to the invention are merely illustrated in detail as above by way of example. These examples are only for the purpose of illustrating the principle of the invention and the implementations thereof, rather than limiting the invention. Those skilled in the art can make various variations and improvements without departing from the spirit and scope of the invention. Therefore, all equivalent technical solutions should fall within the scope of the invention and be defined by the claims of the invention.

## Claims

1. A vehicle front floor structure, comprising a left rocker panel, a right rocker panel, and a plurality of cross beams arranged between the left rocker panel and the right rocker panel, **characterized in that** the cross beams comprise at least two cross beams of a first type arranged at intervals, and the at least two cross beams of the first type are both aluminium alloy extrusion moulded members and are configured to have different cross-sectional shapes from each other, such that the amount of deformation of the left rocker panel and/or the right rocker panel when a vehicle is subjected to a side impact meets a set requirement, which includes maintaining a set distance between the deformed left and/or right rocker panel and a vehicle component that is mounted on at least some of the cross beams in a suspended manner.

2. The vehicle front floor structure according to claim 1, **characterized in that** the cross beams further comprise at least one cross beam of a second type, which is a steel stamped member and is arranged spaced apart from the at least two cross beams of the first type.

3. The vehicle front floor structure according to claim 2, **characterized in that** the at least one cross beam of the second type and the at least two cross beams of the first type are configured to have different cross-sectional shapes from each other, such that the amount of deformation of the left rocker panel and/or the right rocker panel when the vehicle is subjected to the side impact meets the set requirement.

4. The vehicle front floor structure according to claim 1, **characterized in that** the cross beams are all formed from the cross beams of the first type.

5. The vehicle front floor structure according to any one of claims 1 to 4, **characterized in that** the cross beams are arranged to have a decreasing cross-sectional area in a longitudinal direction from a vehicle head to a vehicle tail.

6. The vehicle front floor structure according to any one of claims 1 to 4, **characterized in that** at least two of the cross beams are configured to have the same cross-sectional shape as each other.

7. The vehicle front floor structure according to any one of claims 1 to 4, **characterized in that** the cross beams are all fixedly connected to the left rocker panel and the right rocker panel by means of mechanical connection, and the at least some of the cross beams are provided with one or more mounting portions for mounting and connecting the vehicle component thereto.

8. An aluminium alloy extrusion moulded member, used for the cross beams of the first type in the vehicle front floor structure according to any one of claims 1 to 7.

9. A vehicle, **characterized by** comprising a vehicle front floor structure according to any one of claims 1 to 7, or at least two aluminium alloy extrusion moulded members according to claim 8.

10. The vehicle according to claim 9, **characterized in that** it includes a battery electric vehicle and a hybrid electric vehicle.
